# NOUVEAU FASCICULE DE BREVET EUROPEEN

(11) **EP 3 007 956 B2**
(45) Date de publication et mention de la décision concernant l'opposition: **04.03.2026**
(45) Mention de la délivrance du brevet: 15.02.2017
(21) Numéro de dépôt: 14725427.0
(22) Date de dépôt: 20.05.2014
(51) Int. Cl.: B62D 1/06, B62D 1/11, B62D 1/04

(54) **VOLANT DE VEHICULE**
FAHRZEUGLENKRAD
VEHICLE STEERING WHEEL

(30) Priorité: 14.06.2013 FR 1301386
(43) Date de publication de la demande: 20.04.2016
(73) Titulaire: Autoliv Development AB, 447 83 Vårgårda (SE)
(72) Inventeur: MOINARD, Fabrice, F-86170 Vouzailles (FR); CASSIN, Sébastien, F-86130 Jaunay Clan (FR); BASQUE, Pierre, F-86380 Marigny Brizay (FR); BOUHET, Pascal, F-86380 Vendeuvre du Poitou (FR); HESRY, Guillaume, F-33700 Merignac (FR)
(74) Mandataire: Poindron, Cyrille
(86) Numéro de dépôt international: PCT/EP2014/060275
(87) Numéro de publication internationale: WO 2014/198499

(56) Documents cités:
- EP-A1- 0 763 876
- EP-A1- 2 511 154
- EP-A2- 1 764 533
- EP-B1- 1 649 725
- EP-B1- 1 941 814
- WO-A1-2011/129747
- WO-A2-01/84618
- WO-A2-01/84618
- WO-A2-2009/030497
- WO-A2-2009/030497
- BE-A- 906 164
- DE-A1- 10 227 943
- DE-A1- 10 325 097
- DE-A1- 102005 003 414
- DE-A1- 102008 036 161
- DE-A1- 102008 036 161
- DE-B3- 102008 019 246
- DE-U1- 202004 012 304
- JP-A- 2001 280 507
- JP-A- 2002 225 725
- JP-A- 2009 012 744
- US-A- 5 560 264
- US-A1- 2011 180 319

## Description

La présente invention concerne de manière générale un volant destiné à être monté sur un véhicule automobile.

Il est connu dans l'art antérieur des volants équipés d'un moteur vibrant afin de procurer une fonction supplémentaire à l'utilisateur. Par exemple, le document US 7 852 225 décrit un volant avec un moteur entraînant un balourd pour mettre le volant en vibration. En contrepartie, ce système présente notamment l'inconvénient de ne pas être très efficace car il est éloigné de la jante sur laquelle sont posées les mains de l'utilisateur. Cependant, la jante est généralement surmoulée avec un polymère liquide qui durcit ensuite. Cette opération de surmoulage pose des problèmes de qualité car le moteur peut se trouver bloqué par du polymère.

En alternative, le document DE102008036161 décrit un volant avec un moteur intégré dans une cavité de la jante, mais ici encore, des problèmes de qualité peuvent survenir si du polymère liquide s'introduit dans la cavité et bloque le moteur électrique et/ou son balourd.

Un but de la présente invention est de répondre aux inconvénients des documents de l'art antérieur mentionnés ci-dessus et en particulier, tout d'abord, de proposer un volant facile à produire, même si la jante est surmoulée avec un polymère liquide.

Pour cela, l'invention est définie par la revendication 1. L'invention concerne un volant de véhicule comprenant :
- une jante comprenant une cavité,
- un appareil, agencé dans la cavité de la jante,
- un capot agencé pour fermer la cavité,
- un polymère injecté au moins partiellement autour de la jante et du capot, caractérisé en ce que le volant comprend des moyens d'étanchéité agencés pour empêcher le polymère de s'introduire dans la cavité lors de son injection.

Le volant selon la mise en oeuvre ci-dessus offre la possibilité de placer l'appareil directement dans la jante, par l'intermédiaire de la cavité, sans risque de voir du polymère liquide s'introduire dans la cavité, car le volant comprend un capot pour fermer la cavité et des moyens d'étanchéité entre la jante et le capot, pour empêcher le polymère liquide de s'introduire dans la cavité.

Selon l'invention, l'appareil est un consommateur d'énergie formé par un moteur, le volant comprend un conducteur d'énergie relié au moteur et agencé pour le connecter à un réseau d'énergie du véhicule, et les moyens d'étanchéité sont agencés pour offrir au conducteur d'énergie un passage étanche vers la cavité. Sans rajouter de joint ou d'orifice, la présente mise en oeuvre permet de raccorder l'appareil à un réseau d'énergie du véhicule sans compromettre l'étanchéité. En effet, le conducteur d'énergie passe au travers de moyens d'étanchéité, et ce passage est naturellement étanche. Selon l'invention, il y a au travers des moyens d'étanchéité un passage pour un câble électrique car l'appareil est électrique.

Selon un mode de réalisation, le capot comprend une butée mécanique agencée pour définir une compression prédéterminée des moyens d'étanchéité lorsque ledit capot ferme la cavité. La butée mécanique évite de devoir exercer un effort de compression calibré dans une plage avec un effort minimum et un effort maximum. Il suffit d'exercer un effort minimum pour mettre la butée mécanique du capot en contact avec une surface de référence de la jante, et l'étanchéité est garantie.

Selon un mode de réalisation, le capot comprend des moyens de positionnement de l'appareil dans la cavité. La fonction de localisation de l'appareil dans la cavité est reportée sur le capot, ce qui permet de simplifier la fabrication de la jante et de sa cavité. Le capot est plus aisé à modifier que la jante, car on peut choisir entre plusieurs modes de réalisation, alors que la jante est obtenue en moulage par injection.

Selon un mode de réalisation, le capot comprend des moyens de localisation sur la jante. Ces contact entre le capot et la cavité garantissant le positionnement maitrisé et reproductible de l'appareil dans la cavité. Cela est utile pour pouvoir définir la cavité la plus petite possible afin d'impacter le moins possible sur le design du volant. Cela permet en outre un positionnement maitrisé et reproductible de l'appareil dans la cavité, quel que soit le mode de fixation du capot sur la jante.

Selon l'invention, le capot est fixé sur la jante par des vis de fixation, et les moyens d'étanchéité sont agencés entre les vis de fixation et la cavité. On peut envisager d'utiliser des vis auto taraudeuses, et leurs trous de passage dans la pièce support seront lisses, ou des vis conventionnelles et leurs trous de passage dans la pièce support seront alors taraudés.

Avantageusement, les moyens d'étanchéité sont un joint entre le capot et la cavité. On peut envisager un joint torique ou quadrilobe, un joint plan, ou un joint à lèvre. Ces types de joints peuvent être réalisés en caoutchouc, en polymère, en papier, ou même en métal (cuivre par exemple).

Avantageusement, l'un du capot ou de la jante est en matière élastique avec une lèvre déformable formant les moyens d'étanchéité. Selon ce mode de réalisation, les moyens d'étanchéité sont intégrés au capot ou à la jante.

Avantageusement, les moyens d'étanchéité sont formés en une protubérance de l'un du capot ou de la jante et sont agencés pour être déformés plastiquement lors du montage du capot sur la jante. On peut envisager d'écraser une partie en saillie qui est suffisamment mince pour se déformer plastiquement et former une barrière au polymère entre la jante et le capot pour l'empêcher de s'introduire dans la cavité.

Avantageusement, le capot est agencé pour être clipsé sur la jante, et l'un du capot ou de la jante comprend une lèvre de clipsage qui forme les moyens d'étanchéité.

Selon un mode de réalisation, l'appareil est un moteur entraînant un balourd. Les moyens d'étanchéité selon l'invention suppriment le risque de fuite de polymère liquide à l'intérieur de la cavité, qui pourrait bloquer le moteur et/ou le balourd.

Selon un mode de réalisation, le volant comprend des trous de passage agencés pour coopérer avec les vis de fixation, et les trous de passage sont débouchant. En combinaison avec la mise en oeuvre où les moyens d'étanchéité passent entre le vis de fixation et la cavité, on peut obtenir une réduction de coûts avec les trous de passage débouchant, sans faire de compromis sur la qualité, car même si du polymère liquide s'introduit entre les trous de passage et les filets des vis de fixation, les moyens d'étanchéité empêcheront le passage du polymère liquide vers la cavité.

Selon un mode de réalisation, les moyens d'étanchéité sont surmoulés sur le capot. Les coûts d'assemblage sont réduits, il n'y a qu'un composant à fixer sur le volant.

Selon un mode de réalisation, les moyens d'étanchéité présentent une dureté comprise entre 40 et 80 shore A.

Selon un mode de réalisation, le polymère est du polyuréthane.

Un second aspect de l'invention est un véhicule automobile comportant au moins un volant selon le premier aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue de dessus d'une armature d'un volant selon l'invention ;
- la figure 2 représente un capot du volant de la figure 1.

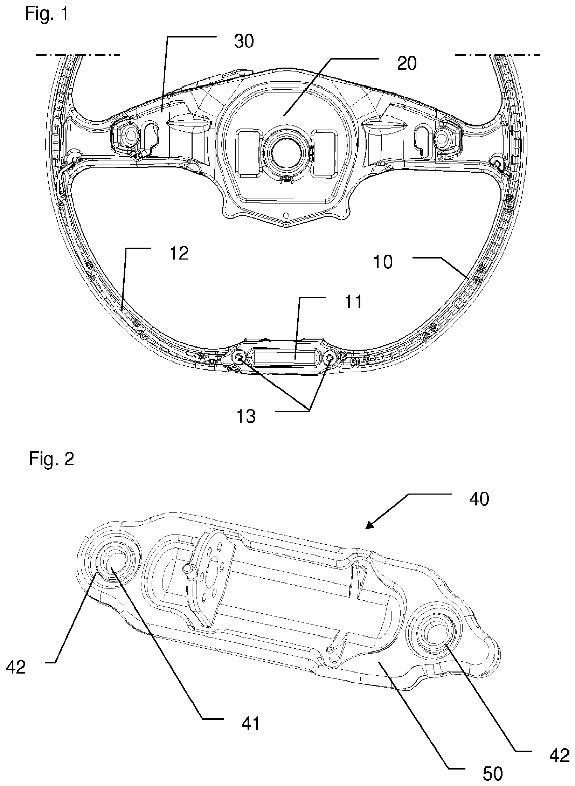

La figure 1 représente une armature d'un volant de véhicule comprenant une jante 10 reliée à un moyeu 20 par deux branches 30. La jante 10 comprend dans sa partie inférieure une cavité 11 agencée pour recevoir un moteur électrique entraînant en rotation un balourd, afin de créer des vibrations.

Ainsi, le volant est mis en vibration directement dans la jante 10, au niveau où sont positionnées les mains d'un utilisateur conduisant le véhicule dans lequel est monté le volant. L'efficacité est améliorée.

Pour alimenter le moteur électrique, un câble électrique 12 part du moyeu 20, passe par une des branches 30 et rejoint la cavité 11 par la jante 10 pour assurer l'alimentation en énergie. Un capot 40 (figure 2) est prévu pour fermer la cavité 11 lorsque le moteur y est monté. Le moteur est monté sur le capot, ce qui permet de limiter les contraintes de réalisation de la cavité 11 dans la jante 10.

Après montage des composants du volant, la jante 10 est surmoulée avec un polymère liquide qui durcit ensuite, par une réaction de polymérisation. On peut envisager par exemple d'utiliser du polyuréthane, qui est très fluide lors de son injection.

Cette fluidité du polymère pendant l'injection peut provoquer des blocages du moteur et/ou du balourd monté(s) dans la cavité 11 si du polymère s'introduit dans la cavité 11.

Afin de remédier à ce problème, l'invention propose d'intégrer des moyens d'étanchéité entre le capot 40 et la jante 10.

La figure 2 représente une vue de dessous du capot 40, avec des moyens d'étanchéité 50 surmoulés sur le capot 40. On peut envisager de surmouler de l'éthylène propylène-diène, ou EPDM, pour obtenir les moyens d'étanchéité 50, avec une dureté Shore A comprise entre 40 et 80.

Le capot 40 comprend deux trous de passage 41 pour des vis de fixation non représentées. Des trous de passage 13 sont prévus dans la jante 10 pour permettre la fixation du capot 40.

Afin de garantir une bonne compression des moyens d'étanchéité, des butées mécaniques 42 sont intégrées dans le capot 40, autour des trous de passage 41. Ainsi, lors du montage, le serrage des vis de fixation amène les butées mécaniques 42 en contact avec la jante 10, ce qui définit et limite la compression des moyens d'étanchéité 50.

Si les trous de passage 13 sont débouchant, du polymère liquide peut s'introduire entre les filets des vis de fixation et les trous de passage 13 et remonter ainsi le long des vis de fixation. Pour éviter toute propagation de ce polymère liquide dans la cavité 11, une partie des moyens d'étanchéité 50 sont agencés entre les trous de passage 41 et la cavité 11.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait mention de moyens d'étanchéité surmoulés sur le capot, il peut être envisagé de surmouler les moyens d'étanchéité localement sur la jante du volant, ou d'implanter des moyens d'étanchéité rapportés.

## Revendications

1. Volant de véhicule comprenant :
- une jante (10) comprenant une cavité (11),
- un appareil, agencé dans la cavité (11) de la jante (10),
- un capot (40) agencé pour fermer la cavité (11),
- un polymère injecté au moins partiellement autour de la jante (10) et du capot (40), **caractérisé en ce que** le volant comprend des moyens d'étanchéité (50) agencés pour empêcher le polymère de s'introduire dans la cavité (11) lors de son injection **en ce que** l'appareil est un consommateur d'énergie formé par un moteur, **en ce que** le volant comprend un conducteur d'énergie relié au moteur et agencé pour le connecter à un réseau d'énergie du véhicule, et **en ce que** les moyens d'étanchéité (50) sont agencés pour offrir au conducteur d'énergie un passage étanche vers la cavité (11),
et **en ce que** le capot (40) est fixé sur la jante (10) par des vis de fixation, et **en ce que** les moyens d'étanchéité (50) sont agencés entre les vis de fixation et la cavité (11).

2. Volant selon la revendication précédente, **caractérisé en ce que** le capot (40) comprend une butée mécanique (42) agencée pour définir une compression prédéterminée des moyens d'étanchéité (50) lorsque ledit capot (40) ferme la cavité (11).

3. Volant selon la revendication 1, **caractérisé en ce qu'**il comprend des trous de passage (13) agencés pour coopérer avec les vis de fixation, et **en ce que** les trous de passage (13) sont débouchant.

4. Volant selon l'une des revendications précédentes, **caractérisé en ce que** les moyens d'étanchéité (50) sont surmoulés sur le capot (40).

5. Volant selon l'une des revendications précédentes, **caractérisé en ce que** les moyens d'étanchéité (50) présentent une dureté comprise entre 40 et 80 shore A.

6. Volant selon l'une des revendications précédentes, **caractérisé en ce que** le polymère est du polyuréthane.

7. Volant selon l'une des revendications précédentes, **caractérisé en ce que** le capot comprend des moyens de positionnement de l'appareil dans la cavité.

8. Volant selon l'une des revendications précédentes, **caractérisé en ce que** l'appareil est un moteur entraînant un balourd.

9. Volant selon l'une des revendications précédentes, **caractérisé en ce que** le capot comprend des moyens de localisation sur la jante.

10. Véhicule automobile comportant au moins un volant selon l'une des revendications précédentes.

## Patentansprüche

1. Fahrzeuglenkrad, umfassend:
- eine Felge (10), umfassend einen Hohlraum (11),
- eine Vorrichtung, die in dem Hohlraum (11) der Felge (10) angeordnet ist,
- eine Haube (40), die angeordnet ist, um den Hohlraum (11) zu verschließen,
- ein Polymer, das mindestens teilweise um die Felge (10) und die Haube (40) eingespritzt ist,
**dadurch gekennzeichnet, dass** das Lenkrad Dichtungsmittel (50) umfasst, die angeordnet sind, um zu verhindern, **dass** das Polymer beim Einspritzen in den Hohlraum (11) eindringt, **dass** die Vorrichtung ein Energieverbraucher ist, der durch einen Motor gebildet wird, **dass** das Lenkrad einen mit dem Motor verbundenen Energieleiter umfasst und angeordnet ist, um ihn mit einem Energienetz des Fahrzeugs zu verbinden, und **dass** die Dichtungsmittel (50) angeordnet sind, um dem Energieleiter einen dichten Durchgang zum Hohlraum (11) zu bieten,
und **dass** die Haube (40) durch Befestigungsschrauben an der Felge (10) befestigt ist, und **dass** die Dichtungsmittel (50) zwischen den Befestigungsschrauben und dem Hohlraum (11) angeordnet sind.

2. Lenkrad nach dem vorstehenden Anspruch,
**dadurch gekennzeichnet, dass** die Haube (40) einen mechanischen Anschlag (42) umfasst, der angeordnet ist, um eine vorbestimmte Kompression der Dichtungsmittel (50) zu definieren, wenn die Haube (40) den Hohlraum (11)verschließt.

3. Lenkrad nach Anspruch 1, **gekennzeichnet dadurch, dass** es Durchgangslöcher (13) umfasst, die angeordnet sind, um mit den Befestigungsschrauben zusammenzuwirken, und **dass** die Durchgangslöcher (13) mündend sind.

4. Lenkrad nach einem der vorstehenden Ansprüche,
**dadurch gekennzeichnet, dass** die Dichtungsmittel (50) auf die Haube (40) aufgespritzt sind.

5. Lenkrad nach einem der vorstehenden Ansprüche,
**dadurch gekennzeichnet, dass** die Dichtungsmittel (50) eine Härte zwischen 40 und 80 Shore A aufweisen.

6. Lenkrad nach einem der vorstehenden Ansprüche,
**dadurch gekennzeichnet, dass** das Polymer Polyurethan ist.

7. Lenkrad nach einem der vorstehenden Ansprüche,
**dadurch gekennzeichnet, dass** die Haube Mittel zum Positionieren der Vorrichtung in dem Hohlraum umfasst.

8. Lenkrad nach einem der vorstehenden Ansprüche,
**dadurch gekennzeichnet, dass** die Vorrichtung ein Motor ist, der eine Unwucht antreibt.

9. Lenkrad nach einem der vorstehenden Ansprüche,
**dadurch gekennzeichnet, dass** die Haube Lokalisierungsmittel auf der Felge umfasst.

10. Kraftfahrzeug, umfassend mindestens ein Lenkrad nach einem der vorstehenden Ansprüche.

## Claims

1. Vehicle steering wheel comprising:
- a rim (10) comprising a cavity (11),
- an apparatus, arranged in the cavity (11) of the rim (10),
- a cover (40) arranged to close the cavity (11),
- a polymer injected at least partially around the rim (10) and the cover (40),
**characterized in that** the steering wheel comprises sealing means (50) arranged to prevent the polymer from being introduced into the cavity (11) during the injection thereof, **in that** the apparatus is an energy consumer formed by a motor, **in that** the steering wheel comprises an energy conductor connected to the motor and arranged to connect it to a vehicle energy network, and **in that** the sealing means (50) are arranged to offer the energy conductor a sealed passage to the cavity (11),
and **in that** the cover (40) is fixed to the rim (10) by fixing screws, and **in that** the sealing means (50) are arranged between the fixing screws and the cavity (11).

2. Steering wheel according to the preceding claim, **characterized in that** the cover (40) comprises a mechanical stop (42) arranged to define a predetermined compression of the sealing means (50) when said cover (40) closes the cavity (11).

3. Steering wheel according to claim 1, **characterized in that** it comprises through holes (13) arranged to cooperate with the fixing screws, and **in that** the through holes (13) are open-ended.

4. Steering wheel according to any of the preceding claims,
**characterized in that** the sealing means (50) are overmolded onto the cover (40).

5. Steering wheel according to any of the preceding claims,
**characterized in that** the sealing means (50) have a hardness of between 40 and 80 shore A.

6. Steering wheel according to any of the preceding claims,
**characterized in that** the polymer is polyurethane.

7. Steering wheel according to any of the preceding claims,
**characterized in that** the cover comprises means for positioning the apparatus in the cavity.

8. Steering wheel according to any of the preceding claims,
**characterized in that** the apparatus is a motor driving an unbalanced mass.

9. Steering wheel according to any of the preceding claims,
**characterized in that** the cover comprises locating means on the rim.

10. Motor vehicle comprising at least one steering wheel according to any of the preceding claims.
